# DEMANDE DE BREVET EUROPEEN

(11) **EP 1 717 215 A1**
(43) Date de publication de la demande: **02.11.2006**
(21) Numéro de dépôt: 05290867.0
(22) Date de dépôt: 19.04.2005
(51) Int. Cl.: C04B 7/52, B28B 3/12, B30B 11/00

(54) **Procédé de compaction de liant hydraulique et compacts broyés**

(71) Demandeur: LAFARGE, 75116 Paris (FR)
(72) Inventeur: Faure, Jean-Michel, 69600 Oullins (FR); Fonquerne, Corinne, 69100 Villeurbanne (FR); Garcia, Emmanuel, 38110 Saint-Didier-de-la-Tour (FR)
(74) Mandataire: Hirsch & Associés

(57) **Abrégé**

L'invention a pour objet un procédé de compression d'un liant hydraulique dans une presse à rouleaux en des compacts, et un dispositif de compression d'un liant hydraulique.

L'invention a aussi pour objet un comprimé de liant hydraulique broyé.

## Description

### DOMAINE TECHNIQUE

L'invention a pour objet un procédé de compaction de liant hydraulique, en particulier de ciment, par voie sèche, ainsi que les compacts en résultant ultérieurement broyés. L'invention a aussi pour objet un dispositif de mise en oeuvre du procédé.

### ARRIERE-PLAN TECHNOLOGIQUE

La granulation et la compaction du ciment et autres additifs couramment utilisés dans la préparation d'un béton sont connues pour améliorer les caractéristiques d'écoulement et/ou de manipulation. On connaît la granulation par voie humide et par voie sèche notamment (compaction).

La granulation en voie humide est utilisée pour transformer le ciment en granulés sphériques de taille comprise entre 500 µm à 3 mm. Le procédé consiste à pulvériser une solution liante sur les grains de ciment mis en mouvement dans un mélangeur-granulateur ou bien une assiette à granuler, pour provoquer l'agglomération. Cette technique nécessite l'utilisation d'un produit liant et d'un solvant de dissolution du liant. Dans le cas du ciment, on utilise par exemple un alcool et un liant (polymère) pour l'obtention de granulés. Si d'un point de vue procédé, la granulation offre de bons résultats, la caractérisation des granulés obtenus à différents taux de liant (polymère) montre cependant que les propriétés d'usage d'un ciment classique ne sont pas retrouvées avec l'utilisation d'un ciment granulé. En effet, le solvant et le liant (polymère) interagissent avec le ciment. De forts retards de prise et des chutes de résistances très importantes selon les taux de liant étudiés sont alors observés, ainsi que éventuellement des problèmes de redispersion des granulés dans l'eau pour certains taux de liants. A l'échelle industrielle, ce type de procédé implique également des dispositifs de recyclage des solvants, difficilement envisageables dans l'industrie cimentière en raison des coûts supplémentaires engendrés et de la sécurisation d'un tel site industriel. US-P-6500253 décrit un tel procédé de granulation par voie humide.

On connaît aussi la compaction ou compression à sec, selon ce même brevet US-P-6500253, qui consiste à préparer un mélange d'un ciment et d'un agent de désintégration, puis à compacter ce mélange dans une machine appropriée du type "tabletting" (ou à poinçons ou isostatique).

Les procédés de compaction par voie sèche doivent en outre pouvoir apporter une solution à tout ou partie des points suivants qui se posent avec le ciment qui est une poudre très fine, très pulvérulente et très hygroscopique:
- réduire l'émission de poussière et faciliter les propriétés d'écoulement (stockage et manutention), c'est l'objet même de la compaction, tout en assurant
- la redispersabilité dans l'eau, et
- des propriétés mécaniques du béton satisfaisantes.

Les procédés de compaction ou compression doivent donc permettre d'obtenir un compromis solidité/redispersion, bien que ces deux effets soient antagonistes et reposent sur la même propriété intrinsèque, la porosité du granulé ou du comprimé.

Le demandeur a étudié les procédés de compression de poudres, notamment les procédés de type isostatique (ou à poinçons) dits "tabletting". Les essais de tabletting mis en oeuvre par le demandeur ont permis d'obtenir des pastilles de ciment. Mais une telle technique n'est pas envisageable à l'échelle industrielle. En effet, l'obtention de tablettes convenables en terme de solidité impose des paramètres de procédé inadaptés à la presse et à une production industrielle; les rendements de production obtenus sont alors très faibles. Alternativement ou cumulativement, il serait nécessaire de modifier les propriétés du ciment par ajout d'additifs qui augmenteraient le coût de manière significative. Il est donc clair que la compression du ciment ne peut pas être mise en oeuvre par ce procédé.

Il existe donc un besoin d'un procédé à l'échelle industrielle pour compacter ou compresser le ciment sous une forme qui permette une manipulation aisée tout en assurant une bonne redispersabilité dans l'eau pour fournir des bétons ayant des propriétés mécaniques qui ne soient pas dégradées.

### RESUME DE L'INVENTION

L'invention fournit donc un procédé de compression d'un liant hydraulique dans une presse à rouleaux en des compacts, ainsi qu'un comprimé de liant hydraulique broyé.

Selon un mode de réalisation, les compacts ont une dimension caractéristique comprise entre 5 et 100 mm, de préférence entre 10 et 50 mm.

Selon un mode de réalisation, le procédé comprend en outre une étape de broyage des compacts en des broyats.

Les broyats ont par exemple une dimension caractéristique comprise entre 40 µm et 10 mm, de préférence entre 500 µm et 6 mm.

Selon un mode de réalisation, le procédé comprend en outre une étape de tamisage et une étape de séparation des fines et/ou grosses particules éventuellement générées au cours du procédé.

Selon un mode de réalisation, le procédé comprend en outre une étape de recyclage des particules éjectées hors des rouleaux, des fines et/ou grosses particules séparées vers l'étape de compression dans une presse à rouleaux ou de toute autre poudre éventuellement générées au cours du procédé.

Selon un mode de réalisation, le liant hydraulique est un ciment, de préférence un ciment Portland.

Selon un mode de réalisation, le liant hydraulique comprend un agent de désintégration, de préférence en une quantité inférieure ou égale à 0.5% en poids.

Selon un mode de réalisation, l'agent de désintégration est choisi parmi amidon, notamment amidon de pomme de terre (sodium starch glycolate), amidon de maïs (starch), polyvinylpyrrolidone réticulée (X-PVP ou crospovidone), fibre de cellulose, silice colloïdale, la cellulose microcristalline, l'amidon dit "carboxymethyl starch", la carboxymethyl cellulose réticulée, les dérivés de cellulose du type HEC et HPMC, et leurs mélanges, de préférence parmi la polyvinylpyrrolidone réticulée et l'amidon de pomme de terre.

L'invention a encore pour objet un dispositif de compression d'un liant hydraulique, comprenant:
- une presse à rouleaux pour produire des compacts;
- un broyeur desdits compacts pour produire des broyats et des fines;
- un tamis pour séparer les fines et/ou grosses particules et les broyats; et
- un dispositif de recyclage des fines et/ou grosses particules vers la presse à rouleaux.

### BREVE DESCRIPTION DES FIGURES

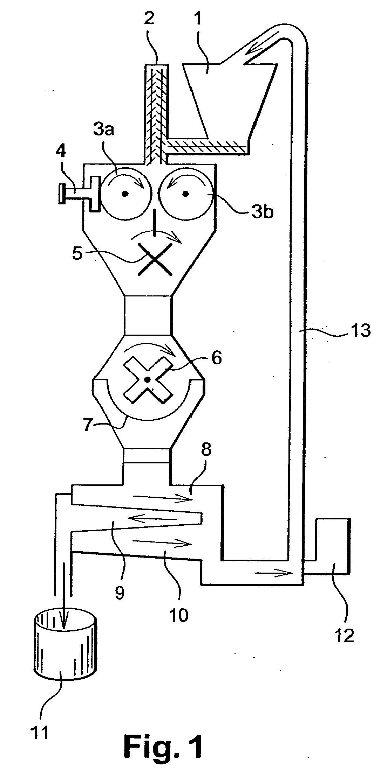

La figure 1 est un schéma d'un dispositif selon l'invention.

### DESCRIPTION DE MODES DE REALISATION DE L'INVENTION.

L'invention est maintenant décrite plus en détails dans la description qui suit.

Le procédé à la base de l'invention est un procédé de compaction ou compression utilisant une presse à rouleaux ou à roues, ou procédé dit de "bricketting". Ce type de procédé, connu depuis longtemps dans d'autres domaines, est cependant traditionnellement associé à des défauts d'hétérogénéité, qui sont la dureté de la surface extérieure et la présence d'un coeur relativement tendre pour les compacts (ou plaques) obtenus. Or c'est justement l'inconvénient traditionnel de cette technique qui est mis à profit par le demandeur dans le cadre de la gestion du compromis solidité/redispersion.

Une presse à rouleaux comprend de façon classique deux roues tangentes ou frettes, ces roues étant animées d'un mouvement de sens contraire. Une seule ou les deux roues ou aucune des deux roues présente(nt) des alvéoles ou des cannelures. La vitesse des deux roues peut être égale ou différente. Les roues peuvent être entraînées en rotation par deux moteurs ou un seul avec un mécanisme de transmission pour l'autre roue. Un distributeur ou pré-compacteur à partir d'une trémie d'alimentation est situé au niveau de la zone de pincement des deux roues tangentes. Ce distributeur peut fonctionner par gravité et/ou plus souvent comporter une alimentation forcée, par exemple avec une vis du type vis d'extrusion, monovis ou bivis. L'alimentation de la poudre par le pré-compacteur peut être effectuée de façon verticale gravitaire libre ou gravitaire forcée (vis d'alimentation): dans ce cas les frettes sont disposées l'une à côté de l'autre. Dans une autre configuration possible, l'alimentation de la poudre par le pré-compacteur peut être effectuée de façon horizontale et forcée (vis d'alimentation): dans ce cas les frettes sont disposées l'une au dessus de l'autre. Un réglage de la pression appliquée par les frettes sur la poudre peut aussi être prévu.

On peut ainsi obtenir des compacts (ou plaques) de géométries et aspects variables. Les frettes lisses ou cannelées conduisent à la formation de compacts sous forme de plaques dont la dimension est liée à la largeur des frettes (pour la largeur), à l'entrefer des frettes (pour l'épaisseur) et à la fragilité de la plaque, donc la pression appliquée (pour la longueur). Par exemple, des plaques de 10x3x1 cm sont envisageables. Les frettes alvéolées conduisent à des compacts individuels de largeur et longueur correspondant à la taille des alvéoles, de forme correspondant à l'empreinte de l'alvéole de chaque frette et en général présentant un plan de symétrie, et d'épaisseur correspondant à l'entrefer des frettes. Par exemple, des compacts de 25 mm de longueur, 15 mm de largeur et 2 mm d'épaisseur peuvent être obtenus. Plusieurs géométries présentant un plan de symétrie et de forme généralement arrondie sont possibles boulet, dragée, oblong, jonc, etc. De préférence, les compacts présenteront un faible élancement (ce qui en général diminue les phénomènes d'attrition et de génération de fins associés). L'invention permet aussi d'éviter le problème de l'effeuillement (ou "capping").

Selon un mode de réalisation, on réalise un broyage des compacts (éventuellement sous forme de plaques). On pourrait aussi broyer un autre type de produit comprimé qui n'est pas nécessairement celui de l'invention. L'invention vise donc aussi ce broyat de comprimés ou granulés ou compacts (ou plaques), quelque soit leur procédé d'obtention. Un broyat peut présenter un avantage supplémentaire. En effet, il présente une dimension relativement faible, qu'il n'est pas possible d'obtenir avec d'autres techniques de compression. La compression dite "tabletting" ne peut pas être mise en oeuvre pour des dimensions inférieures à 5mm notamment. En outre, la quantité de fines dans un broyat (ou rebroyé) est en général inférieure à celle présente dans un autre type de produit, car les particules ayant une liaison faible ont été arrachées lors du broyage et supprimées par tamisage. Comme pour le compact dont il peut être issue, le broyat présente un faible élancement, ce qui diminue encore les phénomènes d'attrition et de génération de fines associée.

Les granulés obtenus après broyage et tamisage ont une taille ou dimension caractéristique comprise entre 40 µm et 10 mm, de préférence entre 500 µm et 6 mm.

Le broyage se fait dans tout broyeur connu de l'homme de l'art, par exemple un broyeur à râpe ou un broyeur à marteaux.

Le broyeur peut être intégré en aval de la presse à rouleaux. Typiquement, il peut se situer sous la presse de sorte que les compacts (ou plaques) tombent dans le broyeur. Un prébroyeur peut éventuellement être prévu entre la presse et le broyeur. Ce prébroyeur peut être par exemple un axe muni d'ailettes entraîné à rotation, soit par le poids des compacts tombant soit par un moteur. Le broyeur est en particulier un broyeur à râpe. En aval du broyeur se trouve une unité de tamisage, qui opère la séparation. En général, à ce stade, on récupère au moins deux ou trois fractions. Dans le cas de trois fractions, la première fraction comprend les particules de grande taille (grosses particules), la seconde fraction comprend les broyats recherchés et la troisième fraction comprend les fines. Les première et troisième fractions sont avantageusement combinées pour être recyclées. Dans le cas de deux fractions, la première fraction comprend les broyats recherchés et la seconde fraction comprend les fines. La seconde fraction est en général recyclée. Ce recyclage peut se faire de façon appropriée par le circuit d'alimentation qui amène aussi le produit de départ pulvérulent, par exemple alimenté en pied du dispositif. La fraction des compacts recherchés est récupérée par une verse et conditionnée. On pourrait aussi prévoir un broyeur qui ne délivre que les fractions ayant des tailles inférieures à la valeur maximale de l'intervalle de taille pour le broyat, c'est-à-dire qu'il n'y aurait plus la première fraction (c'est le cas lorsqu'il n'y a que deux fractions tel que décrit ci-dessus).

La figure 1 est une représentation schématique d'un tel dispositif. Dans cette figure, les références visent les éléments suivants décrits plus haut:
- 1: trémie d'alimentation
- 2: double-vis d'alimentation
- 3a, 3b: roues tangentes
- 4: dispositif de réglage de pression
- 5: prébroyeur
- 6: broyeur
- 7: tamis
- 8: zone de première fraction
- 9: zone de seconde fraction
- 10: zone de troisième fraction
- 11: récupérateur
- 12: alimentation en poudre
- 13: boucle de recyclage et d'alimentation

La densité apparente vrac du liant mis en forme est légèrement modifiée. Alors qu'une densité apparente vrac du ciment en poudre est de 1.1 g/cm³, la densité apparente vrac des produits compactés et des granulés (compacts (re)broyés) sont respectivement de 1.27 g/cm³ et 1.25 g/cm³. Le facteur de densification est donc en général compris entre 1.1 et 1.4.

Le liant hydraulique est tout liant classique et comprend par exemple le ciment (Portland), le gypse, les pouzzolanes, laitiers, ciments alumineux, etc. On préférera le ciment (Portland). Le procédé selon l'invention trouvera aussi à s'appliquer, le cas échéant, aux composants traditionnels des bétons, comme par exemple les cendres volantes, les fumées de silice, etc. Ces composants traditionnels peuvent aussi être déjà présents en combinaison avec le liant hydraulique; par exemple on peut avoir un compact comprenant du ciment Portland associé à de la fumée de silice, en des proportions variables. En général, le liant (le plus souvent un ciment) constitue la majorité du compact (plus de 95% en poids par exemple), sinon la totalité, à l'exclusion des additifs en particulier ceux cités infra.

Les compositions de liant hydraulique, en particulier de ciment, sous quelque forme que ce soit, peuvent comprendre des additifs, de préférence en une quantité totale inférieure ou égale à 0.5%. On peut citer:
- les agents liants, qui améliorent l'enrobage et la liaison entre les composants d'un matériau hétérogène de manière à lui conférer de la cohésion;
- les agents lubrifiants, qui sont ajoutés pour abaisser la porosité de l'édifice particulaire et pour favoriser les forces de liaison. Les problèmes de colmatage se trouvent réduits et rendent un aspect plus lisse et brillant au produit aggloméré; et
- les agents désintégrants, qui permettent d'accélérer la désintégration d'un agglomérat. Le mécanisme de désintégration est purement physique. L'additif gonfle au contact de l'eau; il fait à son tour gonfler puis éclater l'agglomérat.

On préfère que ce dernier composé ou agent de désintégration soit présent pour favoriser la redispersion dans l'eau.

L'agent de désintégration n'est pas critique, pour autant que la redispersion dans l'eau soit correcte. Le ciment est en effet redispersé lors de l'opération de malaxage en présence d'agrégats dont les grains ont un effet d'attrition, qu'il s'agisse d'un malaxage en usine ou dans une centrale à béton. Tout agent de désintégration est en général approprié. On peut citer à titre d'exemple et de façon non-limitative: amidon, notamment amidon de pomme de terre (sodium starch glycolate), amidon de maïs (starch), polyvinylpyrrolidone réticulée (X-PVP ou crospovidone), fibre de cellulose, la carboxymethyl cellulose réticulée, silice colloïdale, la cellulose microcristalline, l'amidon dit "carboxymethyl starch", les dérivés de cellulose du type HEC et HPMC, et leurs mélanges.

Comme agent liant, on peut citer le polyéthylène glycol et la cellulose microcristalline (outre son rôle d'agent de désintégration) ainsi que la polyvinylpyrrolidone.

Comme agent lubrifiant, on peut citer le stéarate de magnésium et l'acide stéarique.

D'autres additifs peuvent aussi être présents dans les produits selon l'invention. On peut citer notamment les plastifiants et superplastifiants, les accélérateurs, les entraîneurs d'air, etc.

### EXEMPLES

Les exemples suivants illustrent l'invention sans la limiter.

### Exemple 1.

La presse utilisée est une presse de laboratoire à roues tangentes avec alimentation gravitaire. Les compacts de taille environ 25x10x5 mm sont ensuite broyés dans un broyeur à râpe afin d'obtenir des granulés. Un tamisage permet au final l'obtention de granulés de taille comprise entre 500 µm et 3 mm.

Diverses compositions ont été testées au niveau des résistances des mortiers finaux. On utilise des compositions du type:

| Composants | Quantité (g) |
|---|---|
| Sable siliceux 0-0.315 | 385 |
| Sable siliceux 0.315-1 | 1385 |
| Sable siliceux 1-4 | 980 |
| Ciment CEM 32.5 R II/B | 623 |
| Eau de mouillage | 105 |
| Lignosulfonate (solution du sel sodique) | 7 |
| Eau de calage | qsp slump 8-9, env. 230 |

Le ciment est un ciment CEM II/B 32.5 R, éventuellement avec des additifs. La référence est un ciment qui est pulvérulent (à savoir le témoin est un ciment non granulé).

Les granulés sont testés à l'échelle laboratoire. On utilise une formule de mortier de béton conventionnel On utilise un malaxeur de laboratoire Perrier.

Les compositions sont établies de manière à obtenir une valeur d'étalement ou "slump" de 8-9 cm, comme dans le cas des mélanges physiques. La mesure des résistances à 1 jour et 28 jours est réalisée, de façon classique.

Pour les deux séries d'essais successifs réalisées, on obtient les résultats suivants, avec d'une part la PVP réticulée (Luvicross^{®}) et l'amidon de maïs (starch 1500^{®}), pour deux dosages, 0.5% et 1%. Les tableaux 1 et 2 donnent les résultats pour la PVP réticulée et l'amidon de maïs, respectivement.

**Tableau 1.**

| Résistance (MPa) | Référence | 1% | 0.5% |
|---|---|---|---|
| Flexion 1j | 2.57 | 2.30 | 2,57 |
| Compression 1j | 9.38 | 9.10 | 9.65 |
| Flexion 28j | 7.60 | 6.85 | 7.18 |
| Compression 28j | 43.95 | 37.53 | 39.06 |

**Tableau 2.**

| Résistance (MPa) | Référence | 1% | 0.5% |
|---|---|---|---|
| Flexion 1j | 2.68 | 2.54 | 2.60 |
| Compression 1j | 8.90 | 8.04 | 8.23 |
| Flexion 28j | 7.31 | 7.22 | 7.52 |
| Compression 28j | 40.85 | 37.07 | 39.58 |

Les valeurs des résistances à la flexion et à la compression, à 1j et à 28j, sont donc sensiblement identiques entre la référence et les produits selon l'invention contenant 0.5% ou 1% d'agent de désintégration.

### Exemple 2.

La presse utilisée est une presse industrielle et le broyeur est un broyeur à râpe. Le ciment utilisé est un CPA CEM II/B 32.5 R. On récupère la fraction de granulés 1-6mm après broyage de plaques. On prépare des compositions contenant 0.5% de PVP réticulée. On utilise 2 pressions différentes sur la machine, à savoir:

| | Pression (bar) | Force spécifique (kN/cm) |
|---|---|---|
| P1 | 121 | 50 |
| P2 | 158 | 65 |

Les granulés sont testés en mortier normalisé CEN suivant le protocole normalisé EN 196-1. Le témoin est gâché à partir du ciment pulvérulent. Les résultats sont donnés dans le tableau 3 ci-dessous.

**Tableau 3.**

| Résistance (MPa) | Référence | P1 | P2 |
|---|---|---|---|
| Compression 1j | 10.4 | 12.8 | 10.1 |
| Compression 2j | 17.8 | 15.5 | 13.7 |
| Compression 7j | 32.3 | 33.0 | 29.1 |
| Compression 28j | 41.3 | 45.6 | 39.2 |

Les valeurs des résistances à la compression, sont donc sensiblement identiques entre la référence et les produits selon l'invention contenant 0.5% d'agent de désintégration.

### Exemple 3.

Un essai sur presse industrielle a été effectué pour obtenir des boulets. Pour cet essai on utilise des frettes alvéolées et non cannelées .Les boulets mesurent 3 cm de long pour une épaisseur de 1.5 cm et une largeur de 2 cm. Le mélange utilisé pour cette mise en forme est le ciment à 0.5% de PVP réticulée. Un test simple d'immersion du boulet dans l'eau montre que la redispersion s'opère spontanément; l'eau pénètre dans le boulet par la zone médiane plus poreuse (interface de jonction des deux hémisphères, provenant de chaque frette).

Les boulets sont testés en mortier normalisé de la même façon que dans l'exemple 2, puis comparés à la référence. Les résultats sont donnés dans le tableau 4 ci-dessous.

**Tableau 4.**

| Résistance (MPa) | Référence | Boulet |
|---|---|---|
| Compression 1j | 10.4 | 13.4 |
| Compression 2j | 17.8 | 22.0 |
| Compression 7j | 32.3 | 35.15 |
| Compression 28j | 41.3 | 47.2 |

Les valeurs des résistances à la compression, sont donc sensiblement identiques entre la référence et les produits selon l'invention contenant 0.5% d'agent de désintégration.

## Revendications

1. Procédé de compression d'un liant hydraulique dans une presse à rouleaux en des compacts.

2. Procédé selon la revendication 1, dans lequel le liant hydraulique comprend un agent de désintégration, de préférence en une quantité inférieure ou égale à 0.5% en poids.

3. Procédé selon la revendication 1 ou 2, dans lequel les compacts ont une dimension caractéristique comprise entre 5 et 100 mm, de préférence entre 10 et 50 mm.

4. Procédé selon l'une des revendications 1 à 3, comprenant en outre une étape de broyage des compacts en des broyats.

5. Procédé selon la revendication 4, dans lequel les broyats ont une dimension caractéristique comprise entre 40 *µ*m et 10 mm, de préférence entre 500 *µ*m et 6 mm.

6. Procédé selon l'une des revendications 1 à 5, comprenant en outre une étape de tamisage et une étape de séparation des fines et/ou grosses particules éventuellement générées au cours du procédé.

7. Procédé selon l'une des revendications 1 à 6, comprenant en outre une étape de recyclage des particules éjectées hors des rouleaux, des fines et/ou grosses particules séparées vers l'étape de compression dans une presse à rouleaux ou de toute autre poudre éventuellement générées au cours du procédé.

8. Procédé selon l'une des revendications 1 à 7, dans lequel le liant hydraulique est un ciment, de préférence un ciment Portland.

9. Procédé selon l'une des revendications 2 à 8, dans lequel l'agent de désintégration est choisi parmi amidon, notamment amidon de pomme de terre (sodium starch glycolate), amidon de maïs (starch), polyvinylpyrrolidone réticulée (X-PVP ou crospovidone), fibre de cellulose, silice colloïdale, la cellulose microcristalline, l'amidon dit "carboxymethyl starch", la carboxymethyl cellulose réticulée, les dérivés de cellulose du type HEC et HPMC, et leurs mélanges.

10. Procédé selon l'une des revendications 2 à 9, dans lequel l'agent de désintégration est choisi parmi la polyvinylpyrrolidone réticulée et l'amidon de pomme de terre.

11. Comprimé de liant hydraulique broyé.

12. Comprimé de liant hydraulique broyé selon la revendication 11, ayant une dimension caractéristique comprise entre 40 *µ*m et 10 mm, de préférence entre 500 *µ*m et 6 mm.

13. Comprimé de liant hydraulique broyé selon la revendication 11 ou 12, dans lequel le liant hydraulique est un ciment, de préférence un ciment Portland.

14. Comprimé de liant hydraulique broyé selon l'une des revendications 11 à 13, dans lequel le liant hydraulique comprend un agent de désintégration, de préférence en une quantité inférieure ou égale à 0.5% en poids.

15. Comprimé de liant hydraulique broyé selon la revendication 14, dans lequel l'agent de désintégration est choisi parmi amidon, notamment amidon de pomme de terre (sodium starch glycolate), amidon de maïs (starch), polyvinylpyrrolidone réticulée (X-PVP ou crospovidone), fibre de cellulose, silice colloïdale, la cellulose microcristalline, l'amidon dit "carboxymethyl starch", la carboxymethyl cellulose réticulée, les dérivés de cellulose du type HEC et HPMC, et leurs mélanges.

16. Comprimé de liant hydraulique broyé selon la revendication 14 ou 15, dans lequel l'agent de désintégration est choisi parmi la polyvinylpyrrolidone réticulée et l'amidon de pomme de terre.

17. Dispositif de compression d'un liant hydraulique, comprenant:
- une presse à rouleaux pour produire des compacts;
- un broyeur desdits compacts pour produire des broyats et des fines;
- un tamis pour séparer les fines et/ou grosses particules et les broyats; et
- un dispositif de recyclage des fines et/ou grosses particules vers la presse à rouleaux.
